# EUROPEAN PATENT SPECIFICATION

(11) **EP 2 692 669 B1**
(45) Date of publication and mention of the grant of the patent: **20.05.2015**
(21) Application number: 13177944.9
(22) Date of filing: 25.07.2013
(51) Int. Cl.: B65G 57/04, B65B 35/50

(54) **Tile stacking apparatus**
Vorrichtung zum stapeln von fliesen
Appareil pour l'empilage de carreaux

(30) Priority: 30.07.2012 IT BO20120412
(43) Date of publication of application: 05.02.2014
(73) Proprietor: Nuova Sima S.p.A., 40026 Imola (BO) (IT)
(72) Inventor: Bardi, Maurizio, 41043 Formigine (MO) (IT)
(74) Representative: Dall'Olio, Christian

(56) References cited:
- EP-A1- 0 869 091
- WO-A1-2008/108338
- GB-A- 1 016 134

## Description

The present invention relates to an apparatus for stacking tiles.

Apparatus are known which enable stacking of tiles, for example ceramic tiles, so that they can subsequently be packed.

These apparatus are often used in "selection lines", in which homogeneous stacks of tiles are formed according to the respective qualitative characteristics.

Document EP 0 869 091 discloses a tile stacking apparatus according to the preamble of claim 1.

An apparatus for stacking tiles comprises:
one or more tile stacking zones, in which the tiles are progressively stacked on one another;
two loop-wound conveyors made of a flexible material, arranged above the stacking zone, for conveying tiles to be stacked towards the stacking zone;
a plurality of mobile release elements, arranged above the loop-wound conveyors, for abutting the tiles to be stacked arranged on the conveyor elements, causing disengagement of the tiles from the conveyors.

In particular, the two loop-wound conveyors convey the tiles to be stacked towards a transfer position which is proximal to the stacking zone.

In detail, the two loop-wound conveyors are distanced from one another so as to contact respectively a first lateral edge and a second lateral edge, opposite one another, of the tile to be stacked, thus supporting the tile. The two loop-wound conveyors are each wound about respective pulleys such as to extend on a horizontal plane.

Each mobile release element comprises a stem and an idle roller, borne at an end of the stem, so as to be arranged superiorly to a corresponding loop-wound conveyor.

In particular, each stem, and therefore each roller borne by the stem, is activatable so as to perform a vertical outward run, from top towards bottom, so that the roller is brought to the conveyor elements, so as to press on the upper wall of the tile in the transfer position, with the aim of disengaging the tile from the conveyor elements.

The stacking zone is defined by pairs of uprights, usually four, opposite two by two at an appropriate reciprocal distance such as to identify a sort of vertical channel communicating with the conveyor elements, so as to internally receive a stack of tiles.

Internally of the uprights (in particular at least internally of the two uprights) loop-wound chains are housed which extend vertically, following the development of the respective upright, and which each bear a support element. In particular, the support element projects towards the inside of the channel and is vertically step-mobile by means of the loop-wound channels (in turn activated by known means); in detail, each step corresponds to the thickness of a tile.

For the formation of a stack of tiles, a first tile to be stacked is fed onto the conveyor elements and transferred therefrom in the above-mentioned manner, up to being located at the transfer position, above the stacking zone.

The stems are thus activated to carry out the outward run thereof, such that the rollers, as already mentioned, press against the upper surface of the tile so that the tile is expelled from the conveyor elements, towards the stacking zone. The stems can therefore perform the vertical return run thereof, so as to return into the relative initial position.

The first tile which is expelled from the conveyor elements is contacted by the support elements (which are at least two in number) of the stacking zone; these, in fact, are initially borne by the relative chains into the closest position to the conveyor elements, towards the upper end of the uprights, so as to receive and support the first tile.

When the first tile has been received by the support elements, the elements are moved by a step downwards: the second tile which will be expelled from the conveyor line will be arranged on the first tile and so on, until a stack of tiles is formed that comprises a predefined number of tiles.

However, during the transfer of the tiles from the conveyor elements to the stacking zone, there is often damage to and/or breakage of the tiles.

In fact, as already mentioned, the impulse transmitted by the roller on a tile to be stacked must be such as to enable the disengagement of the conveyor elements by the tile.

Further, the tile falls by gravity onto the support elements present in the stacking zone (or a tile which may already be present in the stacking zone), which are arranged at a certain distance from the conveyors, in order to enable correct functioning of the conveyor elements.

With these conditions, each tile to be stacked is subjected to a double stress: in fact, at first the rollers impact the tile resting on the conveyor elements, and, secondly, the tile impacts on the support elements or on another tile already arranged in the stacking zone.

Further, the thickness of the tiles is in some cases limited, and this increases the possibility of damage to and/or breakage of the tiles.

Clearly this damaging/breakage is translated into an increase in costs incurred and times for the formation of a stack of tiles, as the damaged/broken tiles cannot be further used and have to be removed from the stack destined for packing.

Document EP 0 869 091 discloses a tile stacking apparatus according with the preamble of claim 1.

Document GB 1 016 134 discloses a tile stacking apparatus comprising aspirating gripping means activatable to retain a tile to be stacked and to transfer the tile to be stacked towards a stacking zone of tiles.

The aim of the present invention is to obviate the drawback, by providing an apparatus for stacking tiles according to claim 1.

The apparatus of the invention advantageously stops damage and/or breakage of the tiles to be stacked from occurring.

This consequently determines both a considerable reduction in costs to be supported for realising a stack of tiles and a reduction of total times for realising a stack of tiles, as there are no damaged/broken tiles to remove from the stack of tiles under formation.

Specific embodiments of the invention and further adavantageous aspects connected thereto will become clear from the following description, according to what is set out in the claims and with the aid of the accompanying tables of drawings, in which:
figures 1, 2 and 3 each show a perspective view of an apparatus according to the present invention, in different operative configurations, according to an embodiment of the invention;
figure 4 is a larger-scale view of detail K of figure 3;
figures 5, 6, 7 and 8 are each a section view of the apparatus of figures 1, 2, 3 in different operating configurations.

With reference to the accompanying figures, 1 denotes an apparatus for stacking tiles 5 according to the present invention.

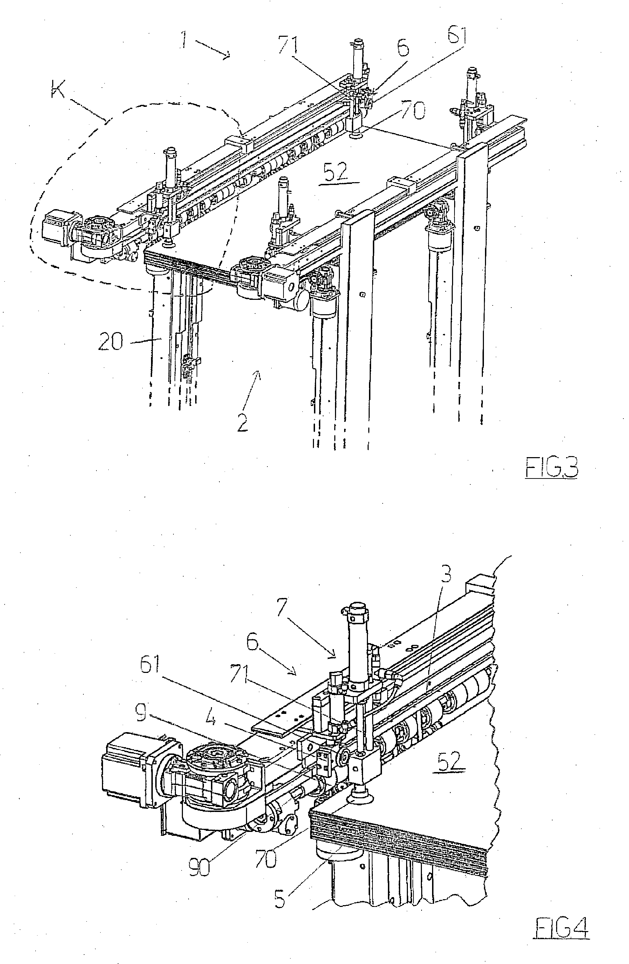

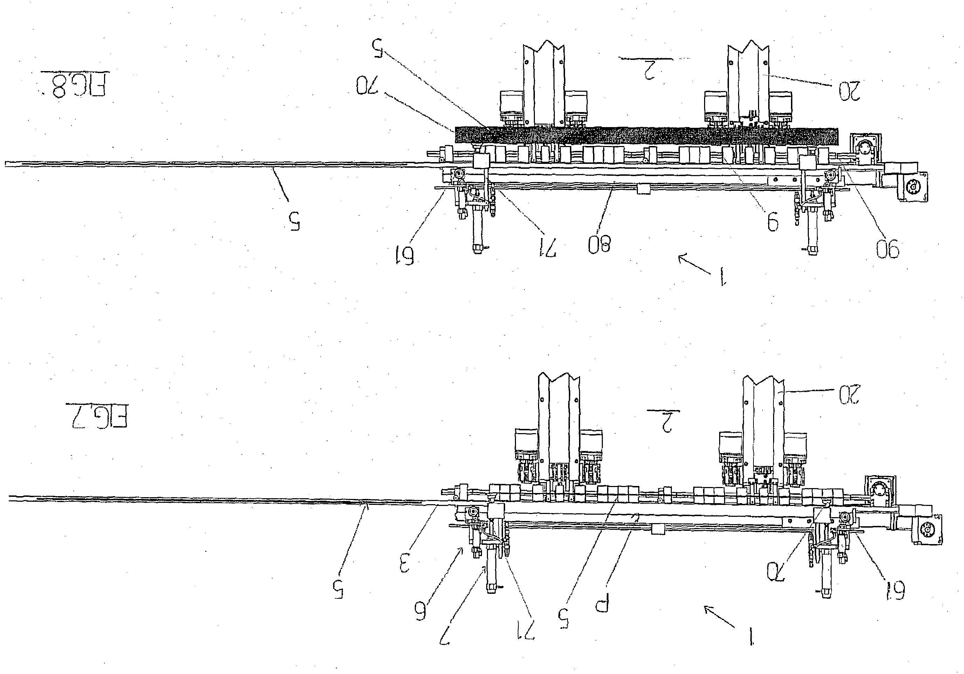

The apparatus 1 comprises: a stacking zone 2 of tiles 5, in which the tiles 5 are progressively stacked on one another (as shown by way of example in figures 3 and 8); conveyor means 3, for conveying tiles 5 to be stacked towards the stacking zone 2.

The conveyor means 3 comprise two conveyor elements 3 (only partially visible in the accompanying figures) which are arranged above the stacking zone 2 such as to convey a tile 5 to be stacked into a transfer position P which is proximal to the storage zone 2; further, they are distanced from one another such as to respectively contact a first lateral edge 50 and a second lateral edge 51 (for example opposite one another) of the tile 5 to be stacked, thus supporting the tile 5 to be stacked. Further, the conveyor means 3 are configured such that a pressure exerted on the upper wall 52 of the tile 5 to be stacked which has arrived in the transfer position P can lead to a disengaging of the conveyor elements 3 from the tile 5 to be stacked.

The apparatus 1 further comprises at least a mobile release element 6 for acting on the upper wall 52 of the tile 5 to be stacked, once the tile to be stacked has arrived in the transfer position P, such as to cause disengagement of the tile 5 to be stacked from the conveyor elements 3.

A particular characteristic of the apparatus 1 of the invention is that it comprises aspirating gripping means 7 of the tile 5 to be stacked, activatable such as to retain the tile 5 to be stacked.

In detail, the aspirating gripping means 7 are mobile between the transfer position P and the stacking zone 2, such as to enable gripping the tile 5 to be stacked when the tile 5 is arranged in the transfer position P, the transfer of the tile 5 to be stacked towards the stacking zone 2 and the release of the tile 5 to be stacked in the stacking zone 2.

The presence of the aspirating gripping means 7 advantageously prevents the drawbacks of the prior art from occurring, i.e. it prevents damage to and/or breakage of the tiles 5 to be stacked which are moved from the conveyor elements 3 to the storage zone 2.

In fact, the aspirating means 7 can contact and retain a tile 5 to be stacked arranged at the transfer position, so as to bring it to the stacking zone 2, and release it there (see in particular figures 3, 4, 7 and 8).

Therefore, once the tile 5 has been released from the conveyor elements 3, it is not allowed to fall, by gravity, up to reaching the stacking zone 2 as occurred with the apparatus of known type, but is instead taken towards the stacking zone 2 up to reaching it.

Consequently, the impact the tile 5 was subject to in the prior art following the fall by gravity, for example onto a tile 5 already stacked in the stacking zone 2, does not occur with the apparatus 1 of the invention.

In a preferred embodiment of the invention, the conveyor element 3 are two closed-loop conveyors (belts, chains..) a first and a second, for example made of a flexible material, wound on corresponding pulleys (not illustrated) so as to be arranged on a horizontal plane.

In particular, the two conveyor elements 3 are flanked to one another so that a first branch of the first conveyor element opposes a first branch of the second conveyor element. As will be clear to a technician in the sector, the tile 5 to be stacked is arranged on the conveyor elements 3 so that the relative first lateral side 50 and the relative second lateral side 51 are contactable, respectively, by the first branch of the first conveyor element and the first branch of the second conveyor element.

The conveyor elements 3 are arranged at a reciprocal distance that is such as to enable at the same time supporting the tile 5 to be stacked (as already mentioned) and the release thereof by the conveyor elements 3 following a pressure exerted on the upper wall 52 of the tile 5 to be stacked (by the mobile release element 6).

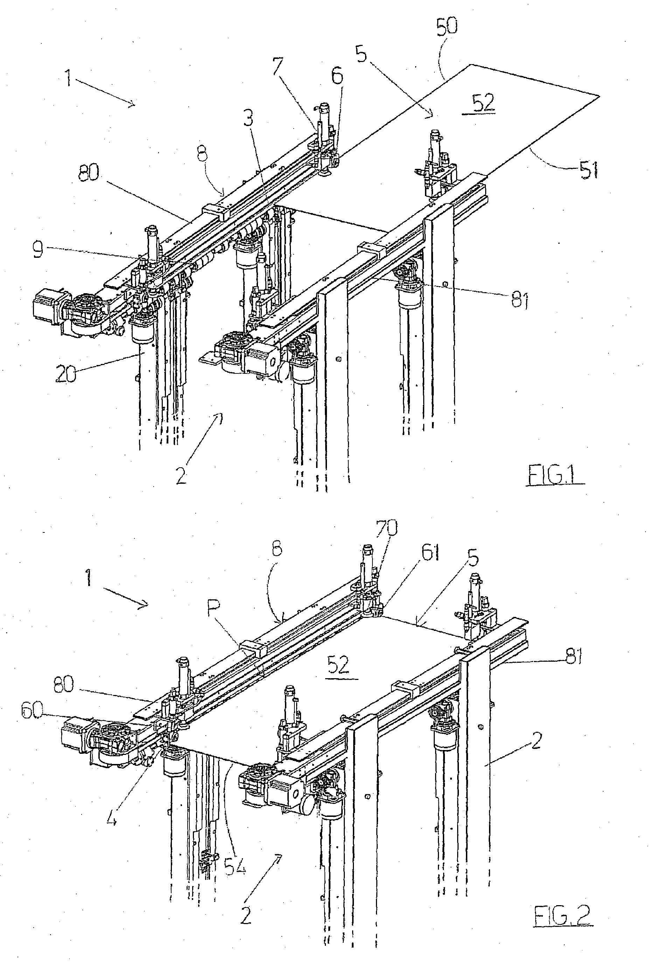

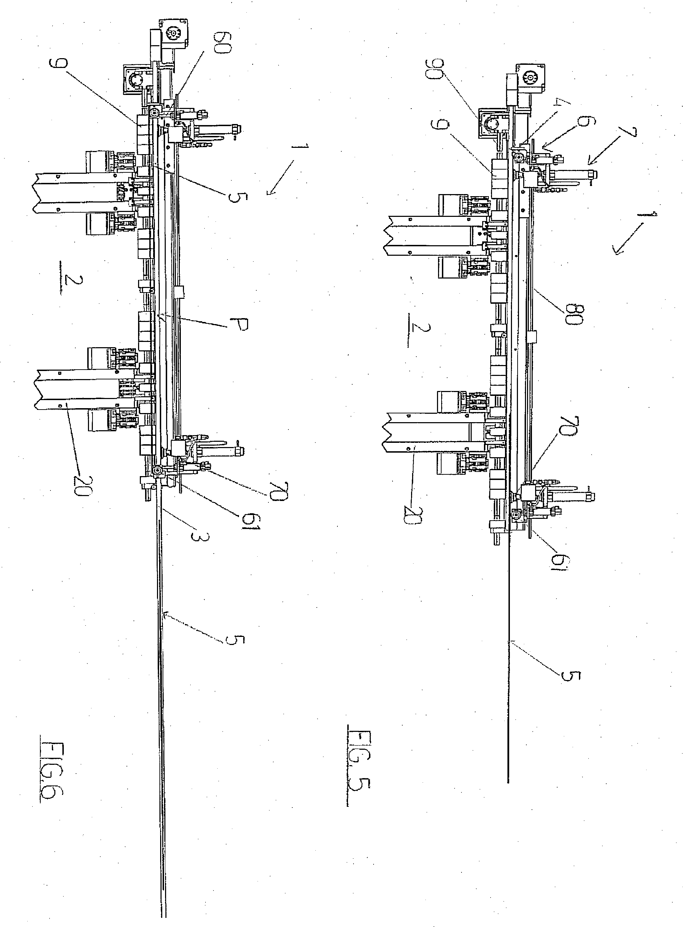

According to the invention, the mobile release element 6 comprises a stem 60 and a roller 61, borne idle by the stem 60, the roller 61 being arranged in such a way as to press on the upper wall 52 of the tile 5 to be stacked, once the tile has reached the transfer position P, such as to determine the disengagement of the tile 5 to be stacked from the conveyor elements 3 (see in particular figures 2 and 6).

In particular, with reference to the accompanying figures, the conveyor elements 3 are parallel to one another and the roller 61 (which is for example made of rubber) is brought by the stem 60 to an end thereof, such that the rotation axis thereof is perpendicular to the development of the conveyor elements 3.

Since a tile 5 reaching the transfer position P has a relative advancing component, the roller 61, when contacting it, rotates at the same time about the rotation axis thereof, thus limiting, advantageously, the friction component between the contact surfaces.

In an embodiment, the apparatus 1 of the invention comprises an aspirating source; the aspirating gripping means 7 comprising a sucker 70 (for example made of a yielding material) connected to the aspirating source, for contacting the upper wall 52 of the tile 5 to be stacked, transferring the tile 5 to be stacked towards the stacking zone 2 and releasing the tile 5 to be stacked into the stacking zone 2.

In particular, the aspirating source is activated when the sucker 70 is positioned at the tiles 5 to be stacked in the transfer position P, so that the sucker 70 retains the tile 5, and is deactivated when the sucker 70 is at the stacking zone 2, so that the sucker 70 releases the tile 5.

In detail, the sucker 70 can be fixed to a corresponding stem 71, as shown in the accompanying figures (see in particular figure 4).

Further, the apparatus 1 can comprise an aspirating conduit (not visible in the accompanying figures) arranged such as to connect the aspirating source to the sucker 70. The aspirating conduit for example can be rigid and function as a support for the sucker 70 and/or be integrated in the support stem 71 of the sucker 70, as in the embodiment of the appended figures.

According to a variant not part of the invention (not illustrated), the mobile release element bears the aspirating gripping means and can also move between the transfer position and the stacking zone.

In particular, the apparatus of the variant can comprise an aspirating source, and the aspirating gripping means can comprise a sucker (for example made of a yielding material), connected to the aspirating source.

In detail, according to the variant the sucker is fixed to the mobile release element for contacting the upper wall of the tile to be stacked, transferring the tile to be stacked towards the stacking zone and releasing the tile to be stacked in the stacking zone.

In other words, when a tile to be stacked reaches the transfer position, the mobile release element is activated: the sucker contacts the upper wall of the tile and the mobile release element presses on the upper wall of the tile, such as to determine the release of the tile to be stacked by the conveyor elements (which can also be in this case the conveyor elements).

Similarly to what is described in the foregoing, the aspirating source is activated when the sucker is at the tile in the transfer position, so that the sucker retains the tile, and is deactivated when the sucker is at the stacking zone, so that the sucker releases the tile.

In this variant the mobile release element and the aspirating gripping means advantageously have a particularly compact size.

In particular, the mobile release element can comprise a stem, which bears the sucker at an end thereof, such as to contact the tile to be stacked as mentioned above.

In this variant too the apparatus can comprise an aspirating conduit arranged such as to connect the aspirating source to the sucker (which can also exhibit the characteristics described for the preceding embodiment).

In particular, with reference to the embodiment of the appended figures, the apparatus 1 can comprise four stems 60, which bear a same number of rollers 61, and four suckers 70 borne by a same number of stems 71, so as to optimize the efficiency of the apparatus 1.

Still with reference to the figures, the apparatus 1 comprises a frame 8 comprising in turn two flanked and parallel guides 80, 81 which each support a corresponding conveyor element 3.

The mobile release element 6 and the aspirating gripping means 7 are fixable to the guides 80, 81; in particular, the mobile release element 6 and the aspirating gripping means 7 are translatable along the guides 80, 81 so as to adapt to the various formats of the tiles 5 to be stacked (which can exhibit even very large dimensions).

In the illustrated embodiment, the two conveyor elements 3 are arranged horizontally and the mobile release element 6 and the aspirating gripping means 7 are vertically mobile.

In particular, the two conveyor elements 3 are arranged parallel to one another so as to restingly receive a first lateral edge 50 and a second lateral edge 51, opposite one another, of a tile 5 to be stacked. In particular, the tile 5 can be arranged resting on the two conveyor elements 3 so that the first lateral edge 50 and the second lateral edge 51 thereof are parallel to the two conveyor elements 3.

The apparatus 1 of the invention can further comprise at least an abutting element 4 (see in particular figure 4), fixable to the mobile release element 6, dimensioned and arranged so as to abuttingly receive a third lateral edge 54 of the tile 5 arranged transversally to the conveyor elements 3, when the mobile release element 6 contacts the tile 5 to be stacked. In particular, the third lateral edge 54 of the tile is abutted by the abutting element 4 at a relative flat surface arranged vertically, so as to be perpendicular to the extension plane of the conveyor element 3; in this way, the abutting element 4 guarantees a correct alignment of the tiles 5 which are stacked in the stacking zone 2.

As illustrated in the appended figures, the apparatus 1 of the present invention can further comprise a plurality of rollers 9 arranged between the conveyor elements 3 and the stacking zone 2. The rollers 9 are rotatable about a rotation axis parallel and alignedly underlying the conveyor elements 3 and are borne idle by a rod 90 passing through the rotation axis and parallel thereto.

The rollers 9 can be made for example of rubber, and are predisposed to dampen the impact that the tile 5 to be stacked is subjected to following the activation of the mobile release element 6 so as to disengage the tile from the conveyor elements 3. This detail, therefore, further prevents any damage to and/or breakage of the tiles 5 to be stacked.

In an embodiment of the invention, the stacking zone 2 is defined by pairs of uprights 20 (only partly visible in the accompanying figures), usually four, opposite two by two at an appropriate reciprocal distance such as to identify a sort of vertical channel communicating with the conveyor elements 3, so as to internally receive a stack of tiles 5.

Internally of the uprights 20 (in particular at least internally of the two uprights) loop-wound chains are housed which extend vertically, following the development of the respective upright 20, and which each bear a support element. In particular, the support element projects towards the inside of the channel and is vertically mobile in step-motion by means of the loop-wound chains (in turn activated by known means); in detail, each step corresponds to the thickness of a tile 5.

The first tile 5 which is disengaged by the conveyor elements 3 is brought by the aspirating gripping means 7 to the support elements of the stacking zone 2 and released there. In fact, the support elements are initially borne by the relative chains into the closest position to the conveyor elements 3, towards the upper end of the uprights 20, so as to receive and support the first tile 5.

When the first tile 5 has been received by the support elements, the elements are moved by a step in a downwards direction: the second tile 5 which will be expelled by the conveyor elements 3 will be arranged on the first tile 5 and so on, until a stack of tiles 5 is formed comprising a predefined number of tiles 5.

The apparatus 1 of the invention is usable for example in "selection lines", in which stacks of tiles 5 have to be formed that are homogeneous according to the relative qualitative characteristics, in order to enable them to be subsequently packed.

The above has been described purely by way of non-limiting example, and any constructional variants are understood to fall within the protective scope of the following claims.

## Claims

1. A tile stacking apparatus (1), comprising:
a stacking zone (2) of tiles (5), in which the tiles (5) are progressively stacked on one another;
conveyor means (3), for conveying tiles (5) to be stacked towards the stacking zone (2);
the conveyor means (3) comprising two conveyor elements (3), which: are arranged above the stacking zone (2) such as to convey a tile (5) to be stacked into a transfer position (P) which is proximal to the storage zone (2);
are distanced from one another such as to respectively contact a first lateral edge (50) and a second lateral edge (51) of the tile (5) to be stacked, thus supporting the tile (5) to be stacked; are configured such that a pressure exerted on the upper wall (52) of the tile (5) to be stacked which has arrived in the transfer position (P) can lead to a disengaging of the conveyor elements (3) from the tile (5) to be stacked;
the apparatus (1) further comprising a mobile release element (6) for acting on the upper wall (52) of the tile (5) to be stacked, once the tile to be stacked has arrived in the transfer position (P), such as to cause disengagement of the tile (5) to be stacked from the conveyor elements (3);
**characterised in that** it comprises:
aspirating gripping means (7) of the tile (5) to be stacked, activatable such as to retain the tile (5) to be stacked; the aspirating gripping means (7) being mobile between the transfer position (P) and the stacking zone (2), such as to enable gripping the tile (5) to be stacked when the tile (5) is arranged in the transfer position (P), the transfer of the tile (5) to be stacked towards the stacking zone (2) and the release of the tile (5) to be stacked in the stacking zone (2);
and **in that** the mobile release element (6) comprises a stem (60) and a roller (61), borne idle by the stem (60), the roller (61) being arranged in such a way as to press on the upper wall (52) of the tile (5) to be stacked, once the tile has reached the transfer position (P), such as to determine the disengagement of the tile (5) to be stacked from the conveyor elements (3).

2. The apparatus (1) of claim 1, comprising an aspirating source; the aspirating gripping means (7) comprising a sucker (70) connected to the aspirating source, for contacting the upper wall (52) of the tile (5) to be stacked, transferring tile (5) to be stacked towards the stacking zone (2) and releasing the tile (5) to be stacked into the stacking zone (2).

3. The apparatus (1) of any one of the preceding claims, wherein the two conveyor elements (3) are arranged horizontally and wherein the mobile release element (6) and the aspirating gripping means (7) are vertically mobile.

## Patentansprüche

1. Fliesenstapelvorrichtung (1), umfassend:
eine Stapelzone (2) von Fliesen (5), in der die Fliesen (5) nacheinander aufeinander gestapelt werden;
ein Fördermittel (3) zum Befördern von zu stapelnden Fliesen (5) zu der Stapelzone (2);
wobei das Fördermittel (3) zwei Förderelemente (3) umfasst, die: über der Stapelzone (2) angeordnet sind, derart, dass sie eine zu stapelnde Fliese (5) in eine Übertragungsposition (P) befördert, die in der Nähe der Stapelzone (2) ist;
voneinander beabstandet sind, derart, dass eine erste Seitenkante (50) und eine zweite Seitenkante (51) der zu stapelnden Fliese (5) jeweils in Kontakt gelangen, wodurch die zu stapelnde Fliese (5) abgestützt wird; derart konfiguriert sind, dass ein Druck,
der auf die obere Wand (52) der zu stapelnden Fliese (5), die in der Übertragungsposition (P) eingetroffen ist, ausgeübt wird, zu einem Lösen der Förderelemente (3) von der zu stapelnden Fliese (5) führen kann;
wobei die Vorrichtung (1) ferner ein mobiles Freigabeelement (6) zu Einwirken auf die obere Wand (52) der zu stapelnden Fliese (5) umfasst, sobald die zu stapelnde Fliese in der Übertragungsposition (P) eingetroffen ist, derart, dass ein Lösen der zu stapelnden Fliese (5) von den Förderelementen (3) bewirkt wird;
**dadurch gekennzeichnet, dass** sie Folgendes umfasst:
ein Ansauggreifmittel (7) der zu stapelnden Fliese (5), das derart aktivierbar ist, dass es die zu stapelnde Fliese (5) hält; wobei das Ansauggreifmittel (7) zwischen der Übertragungsposition (P) und der Stapelzone (2) mobil ist, derart, dass ein Ergreifen der zu stapelnden Fliese (5), wenn die Fliese (5) in der Übertragungsposition (P) angeordnet ist, das Übertragen der zu stapelnden Fliese (5) an die Stapelzone (2) und das Freigeben der zu stapelnden Fliese (5) in der Stapelzone (2) ermöglicht wird;
und dadurch, dass das mobile Freigabeelement einen Schaft (60) und eine Rolle (61) umfasst, die leerlaufend von dem Schaft (60) getragen wird, wobei die Rolle (61) derart angeordnet ist, dass sie auf die obere Wand (52) der zu stapelnden Fliese (5) drückt, sobald die Fliese die Übertragungsposition (P) erreicht hat, derart, dass das Lösen der zu stapelnden Fliese (5) von den Förderelementen (3) bestimmt wird.

2. Vorrichtung (1) nach Anspruch 1, umfassend eine Ansaugquelle; wobei das Ansauggreifmittel (7) einen Sauger (70) umfasst, der mit der Ansaugquelle verbunden ist, um in Kontakt mit der oberen Wand (52) der zu stapelnden Fliese (5) zu gelangen, die zu stapelnde Fliese (5) an die Stapelzone (2) zu übertragen und die zu stapelnde Fliese (5) in die Stapelzone (2) freizugeben.

3. Vorrichtung (1) nach einem der vorangehenden Ansprüche, wobei die zwei Förderelemente (3) horizontal angeordnet sind und wobei das bewegliche Freigabeelement (6) und das Ansauggreifmittel (7) vertikal beweglich sind.

## Revendications

1. Un appareil pour l'empilage de carreaux (1), comprenant:
une zone (2) d'empilage de carreaux (5), dans laquelle les carreaux (5) sont progressivement empilés les uns sur les autres ;
des moyens de transport (3), pour transporter les carreaux (5) à empiler vers la zone d'empilage (2) ;
les moyens de transport (3) comprenant deux éléments de transport (3), qui : sont disposés au-dessus de la zone d'empilage (2) de manière à transporter un carreau (5) à empiler dans une position de transfert (P) qui est proximale à ladite zone d'empilage (2) ; sont espacés l'un de l'autre de manière à entrer en contact respectivement avec un premier bord latéral (50) et un deuxième bord latéral (51) du carreau (5) à empiler,
supportant ainsi ledit carreau (5) à empiler ; sont configurés de manière à ce qu'une pression exercée sur la paroi supérieure (52) du carreau (5) à empiler qui est arrivé dans la position de transfert (P) puisse se traduire par un désengagement des éléments de transport (3) du carreau (5) à empiler ;
l'appareil (1) comprenant en outre un élément de relâche mobile (6) pour agir sur la paroi supérieure (52) du carreau (5) à empiler, quand ce même carreau à empiler est arrivé dans la position de transfert (P), de manière à causer le désengagement dudit carreau (5) à empiler des éléments de transport (3) ;
**caractérisé en ce qu'**il comprend :
des moyens aspirants (7) de prise du carreau (5) à empiler, pouvant être activés de manière à retenir le carreau (5) à empiler ; les moyens aspirants de prise (7) étant mobiles entre la position de transfert (P) et la zone d'empilage (2), de manière à permettre la prise du carreau (5) à empiler quand ce même carreau (5) est disposé dans la position de transfert (P), le transfert du carreau (5) à empiler vers la zone d'empilage (2) et la relâche du carreau (5) à empiler dans la zone d'empilage (2) ;
et **en ce que** l'élément de relâche mobile (6) comprend une tige (60) et un rouleau (61), porté libre par la tige (60), le rouleau (61) étant disposé de manière à exercer une pression sur la paroi supérieure (52) du carreau (5) à empiler, quand ledit carreau a atteint la position de transfert (P), de manière à déterminer le désengagement de ce même carreau (5) à empiler des éléments de transport (3).

2. L'appareil (1) selon la revendication 1, comprenant une source aspirante ; les moyens aspirants de prise (7) comprenant une ventouse (70) reliée à la source aspirante, pour entrer en contact avec la paroi supérieure (52) du carreau (5) à empiler, transférer le carreau (5) à empiler vers la zone d'empilage (2) et relâcher le carreau (5) à empiler dans la zone d'empilage (2).

3. L'appareil (1) selon l'une quelconque des revendications précédentes, dans lequel les deux éléments de transport (3) sont disposés horizontalement et dans lequel l'élément de relâche mobile (6) et les moyens aspirants de prise (7) sont verticalement mobiles.
